# EUROPÄISCHE PATENTSCHRIFT

(11) **EP 0 411 189 B1**
(45) Veröffentlichungstag und Bekanntmachung des Hinweises auf die Patenterteilung: **26.05.1993**
(21) Anmeldenummer: 89114380.2
(22) Anmeldetag: 03.08.1989
(51) Int. Cl.: H05G 1/26, G06F 15/68

(54) **Röntgendiagnostikeinrichtung**
X-ray diagnostic apparatus
Installation de radiodiagnostic

(43) Veröffentlichungstag der Anmeldung: 06.02.1991
(73) Patentinhaber: SIEMENS AKTIENGESELLSCHAFT, 80333 München (DE)
(72) Erfinder: Horbascheck, Heinz, Dipl.-Ing. (FH), D-8520 Erlangen (DE)

(56) Entgegenhaltungen:
- WO-A-84/04878
- DE-A- 3 139 331
- DE-A- 3 500 812

## Beschreibung

Die Erfindung betrifft eine Röntgendiagnostikeinrichtung mit einer durch einen Hochspannungsgenerator betriebenen Röntgenstrahlenquelle, einer Röntgenbildverstärker-Fernsehkette zur Erzeugung von Videosignalen, zur Speicherung der Videosignale einer Leeraufnahme, das heißt, einer Aufnahme ohne einen Patienten, und zur Darstellung von Videosignalen und mit Rechenmitteln zum Verarbeiten der gespeicherten Videosignale und der Videosignale einer nachfolgenden Aufnahme mit einem Patienten. Derartige Röntgendiagnostikeinrichtungen dienen zur Beseitigung von Störstrukturen der Röntgenbildverstärker-Fernsehkette.

In der DE-OS 31 39 331 ist eine Röntgenfernseheinrichtung beschrieben, bei der eine Korrektur des Videosignales erfolgt, um Störstrukturen zu unterdrücken. Vor Beginn einer gewünschten Aufnahme oder Durchleuchtung eines Patienten wird kurzzeitig die Röntgenröhre als Strahlenquelle eingeschaltet und der Röntgenbildverstärker ohne Patient belichtet, so daß sich auf dem Eingangsleuchtschirm keine Nutzinformation ergibt. Das Ausgangsbild des Röntgenbildverstärkers, das beispielsweise Störstrukturen durch Unregelmäßigkeit der Photoschicht enthält, wird über eine Fernsehkamera aufgenommen und in einem Bildspeicher eingespeichert. Bei einer nachfolgenden Aufnahme oder Durchleuchtung wird das gespeicherte Bild von dem aktuellen Bild subtrahiert und dadurch die Störstrukturen kompensiert. Durch diese Röntgenfernseheinrichtung lassen sich aber nur Störstrukturen der Röntgenbildverstärker-Fernsehkette eliminieren.

Bei einer Durchstrahlung von Objekten mit Röntgenstrahlung ist aufgrund des Schwächungsgesetzes an dichten Objektstellen ein geringerer Quantenstörabstand im Bild als an Bildstellen geringerer Dichte zu erwarten. Zusätzlich ist durch den Rauschanteil von Streustrahlungen nochmals eine Störabstandsverschlechterung in dichten Gebieten zu erwarten.

Aus der DE-OS 35 00 812 ist eine Röntgendiagnostikeinrichtung bekannt, bei der eine halbtransparente Blende als objektadaptiertes Röntgenfilter verwendet wird, die die gewünschten dichten Objektzonen freilassen und die transparenten Gebiete in ihrer Helligkeit durch Vorfilterung stark schwächen. Dadurch werden aber auch die Anforderungen an die Dynamik des Empfängersystems reduziert. Nachteilig bei diesem Verfahren ist jedoch, daß in dem Röntgenbild nicht mehr die in dem Objekt vorhandenen naturgetreuen Schwächungsunterschiede zu erkennen sind. Bei einer Auswertung beispielsweise von Lungenaufnahmen kann diese Bildverfälschung die Diagnosetauglichkeit der Bilder negativ beeinflussen. Außerdem ergeben sich oft störende Strukturen im Bild, da es in der Praxis unmöglich ist, die Vorfilterung exakt an das Objekt anzupassen.

Die Erfindung geht von der Aufgabe aus, eine Röntgendiagnostikeinrichtung der eingangs genannten Art zu schaffen, die trotz einer differenziellen Abschwächung der Strahlenintensität durch Vorfilterung nachträglich wieder die tatsächlichen Schwächungswerte ermittelt.

Die Aufgabe wird erfindungsgemäß dadurch gelöst, daß der Röntgenstrahlenquelle Filtermittel zugeordnet sind und daß die Rechenmittel mit der Fernsehkette und dem Hochspannungsgenerator derart verbunden und dazu angeßaßt sind, daß sie die tatsächlichen Schwächungswerte einer Röntgenaufnahme aus der Leeraufnahme und der Aufnahme mit Patient bei jeweils eingeschobenen Filtermitteln errechnen. Auf Grund dieser Anordnung können durch die Filtermittel die normalerweise im Objekt vorhandenen Transparenzunterschiede reduziert werden, so daß sich auch ein gleichmäßiger Quantenstörabstand ergibt. Anschließend werden durch die Rechenmittel die normalen, der Anatomie entsprechenden Helligkeitswerte wieder ermittelt, so daß auf dem angeschlossenen Monitor eine normale Röntgenaufnahme erscheint, bei der kein "verfälschender" Einfluß der Filterung mehr vorhanden ist.

Es hat sich als vorteilhaft erwiesen, wenn die Filtermittel eine Vorfilterung, beispielsweise ein Verlaufsfilter, ein Filter mit unterschiedlicher Schwächung, aufweisen. Eine genaue Rekonstruktion des Röntgenbildes ergibt sich, wenn die Rechenmittel derart aufgebaut sind, daß sie aufgrund der vom Hochspannungsgenerator gelieferten KV-Werte und des Materials des Filtermittels die tatsächlichen absoluten Schwächungswerte bildpunktweise ermittelt.

Eine einfache Anordnung ergibt sich, wenn die Rechenmittel derart ausgebildet sind, daß sie aufgrund von Schwächungskoeffizienten die Schwächungswerte bildpunktweise ermitteln. Die ersten Schwächungskoeffizienten können ermittelt werden, wenn die Rechenmittel eine erste Recheneinheit aufweisen, die mit dem Hochspannungsgenerator und den Speichermitteln für Leeraufnahmen verbunden ist. Zweite Schwächungskoeffizienten aus den Schwächungswerten der Nutzaufnahmen lassen sich bildpunktweise ermitteln, wenn die Rechenmittel eine zweite Recheneinheit aufweisen, die mit dem Hochspannungsgenerator und den Speichermitteln für Nutzaufnahmen verbunden ist. Eine schnelle Verarbeitung wird ermöglicht, wenn eine dritte Recheneinheit vorgesehen ist, die aus den von den Recheneinheiten gelieferten Schwächungskoeffizienten ein Bild mit tatsächlichen Schwächungswerten ermittelt, das dem Objektbild ohne Filter entsprechen würde. Der Störabstand für hohe Ortsfrequenzen wird nicht verschlechtert, wenn die Rechenmittel einen Ortsfrequenz-Tiefpaß aufweisen.

Die Erfindung wird nachfolgend anhand eines in der Zeichnung dargestellten Ausführungsbeispieles näher erläutert.

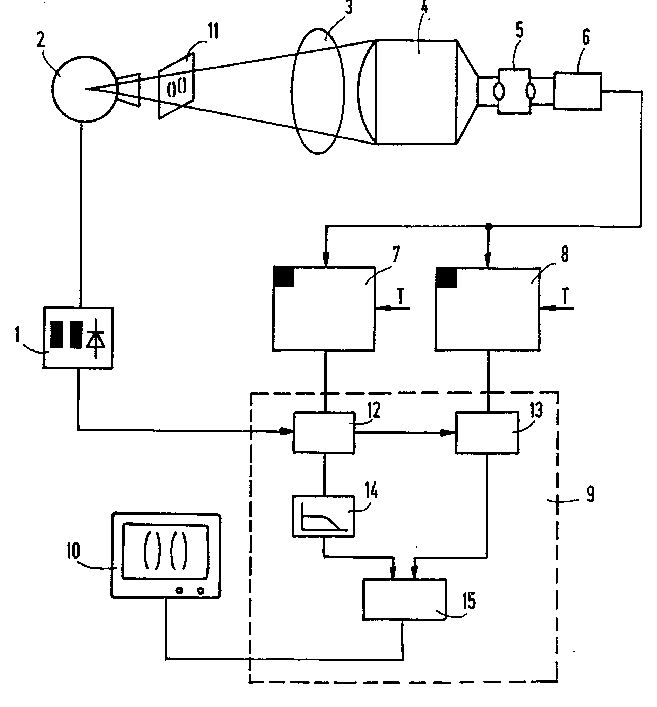

In der FIG 1 ist eine erfindungsgemäße Röntgendiagnostikeinrichtung mit einem Hochspannungsgenerator 1 dargestellt, der eine Röntgenröhre 2 speist, die ein Röntgenstrahlenbündel aussendet, das einen Patienten 3 durchdringt und auf den Eingangsleuchtschirm eines Röntgenbildverstärkers 4 fällt. An dem Ausgangsleuchtschirm des Röntgenbildverstärkers 4 ist über eine Optik 5 eine Fernsehkamera 6 angekoppelt, deren Ausgangs-Video signal zwei in einer Verarbeitungsschaltung angeordneten Bildspeichern 7 und 8 zugeführt wird. Die Bildspeicher 7 und 8 sind über Rechenmittel 9 mit einem Monitor 10 verbunden.

In dem Röntgenstrahlenbündel der Röntgenröhre 2 sind Filtermittel 11 angeordnet, die eine Vorfilterung der Röntgenstrahlen bewirken. Diese Filtermittel 11 können beispielsweise aus einem Lungen-Verlaufsfilter oder auch aus einer Filtermatrix bestehen, das eine über der Fläche gesehen unterschiedliche Schwächung aufweist, so daß im Bereich der Lunge die Strahlen stärker abgeschwächt werden als in den übrigen Bereichen.

In dem ersten Bildspeicher 7 wird ein Leerbild eingespeichert, d.h. ein Bild ohne Nutzinformation durch den Patienten 3. Dadurch erhält man bei der eingestellten Strahlenhärte Information über die Beschaffenheit der Filtermittel 11. In dem zweiten Bildspeicher 8 wird ein Bild mit Patient 3 eingespeichert, so daß in diesem zweiten Bildspeicher 8 die Schwächungswerte des Patienten 3 und der Filtermittel 11 enthalten sind.

Die Rechenmittel 9 weisen an ihren Eingängen zwei Recheneinheiten 12 und 13 auf, die an den Ausgängen der Bildspeicher 7 und 8 angeschlossen sind. Neben der Verbindung mit dem ersten Bildspeicher 7 ist die erste Recheneinheit 12 mit dem Hochspannungsgenerator 1 verbunden, von dem die KV-Werte und beispielsweise Werte, die das Material der Filtermittel 11 kennzeichnen, der ersten Recheneinheit 12 zugeführt werden. Aufgrund des bekannten KV-Wertes bei der Aufnahme und des Materials der Filtermittel 11 lassen sich für das Leerbild die Daten für den absoluten Schwächungswert jedes einzelnen Bildpunktes berechnen und abspeichern.

Bei einer nachfolgenden Aufnahme mit Patient 3 lassen sich ebenfalls unter Kenntnis der KV-Werte und des Materials der Filtermittel 11 die Schwächungskoeffizienten für alle Bildpunkte in der zweiten Recheineinheit 13 berechnen, die mit dem zweiten Bildspeicher 8 und über die erste Recheneinheit 12 mit dem Hochspannungsgenerator 1 verbunden ist.

Mit diesen, in den ersten beiden Recheneinheiten 12 und 13 ermittelten Daten, den Schwächungskoeffizienten, wird in der dritten Recheneinheit 15 ein Bild berechnet, das dem Objektbild ohne zusätzliche Schwächung durch die Filtermittel 11 entspricht und somit die tatsächlichen absoluten Schwächungswerte darstellen würde. Diese können dann auf dem Monitor 10 wiedergegeben werden.

Da das Verlaufsfilter keinerlei große Kontrastsprünge beinhaltet, kann das Korrektursignal mit einem Ortsfrequenztiefpaß 14 beaufschlagt werden, so daß der Störabstand für hohe Ortsfrequenzen sich nicht verschlechtert.

Eine derartige Vorrichtung kann auch im Durchleuchtungsbetrieb eingesetzt werden, wenn das Ausgangssignal der Fernsehkamera 6 mit der Nutzinformation, d.h. dem Bild mit Patienten 3, direkt der zweiten Recheneinheit 13 ohne Zwischenspeicherung zugeführt wird, so daß eine sofortige Berechnung der Schwächungskoeffizienten und der tatsächlichen Schwächungswerte erfolgen kann.

## Patentansprüche

1. Röntgendiagnostikeinrichtung mit einer durch einen Hochspannungsgenerator (1) betriebenen Röntgenstrahlenquelle (2), mit einer Röntgenbildverstärker-Fernsehkette (4 bis 8, 10) zur Erzeugung von Videosignalen, zur Speicherung der Videosignale einer Leeraufnahme, das heißt, einer Aufnahme ohne einen Patienten, und zur Darstellung von Videosignalen und mit Rechenmitteln (9) zum Verarbeiten der gespeicherten Videosignale und der Videosignale einer nachfolgenden Aufnahme mit einem Patienten, **dadurch gekennzeichnet,** daß der Röntgenstrahlenquelle (2) Filtermittel (11) zugeordnet sind und daß die Rechenmittel (9) mit der Fernsehkette (6 bis 8) und dem Hochspannungsgenerator (1) derart verbunden und dazu angepaßt sind, daß sie die tatsächlichen Schwächungswerte einer Röntgenaufnahme aus der Leeraufnahme und der Aufnahme mit Patient bei jeweils eingeschobenen Filtermitteln (11) errechnen.

2. Röntgendiagnostikeinrichtung nach Anspruch 1, **dadurch gekennzeichnet,** daß die Filtermittel (11) eine Vorfilterung aufweisen.

3. Röntgendiagnostikeinrichtung nach Anspruch 1 oder 2, **dadurch gekennzeichnet,** daß die Filtermittel (11) ein Verlaufsfilter, das heißt ein Filter mit unterschiedlicher Schwächung, aufweisen.

4. Röntgendiagnostikeinrichtung nach einem der Ansprüche 1 bis 3, **dadurch gekennzeichnet,** daß die Rechenmittel (9) derart aufgebaut sind, daß sie aufgrund der vom Hochspannungsgenerator (1) gelieferten KV-Werte und des Materials der Filtermittel (11) die tatsächlichen Schwächungswerte bildpunktweise ermitteln.

5. Röntgendiagnostikeinrichtung nach einem der Ansprüche 1 bis 4, **dadurch gekennzeichnet,** daß die Rechenmittel (9) derart ausgebildet sind, daß sie aufgrund von Schwächungskoeffizienten die Schwächungswerte bildpunktweise ermitteln.

6. Röntgendiagnostikeinrichtung nach einem der Ansprüche 1 bis 5, **dadurch gekennzeichnet,** daß die Rechenmittel (9) eine erste Recheneinheit (12) aufweisen, die erste Schwächungskoeffizienten ermittelt und mit dem Hochspannungsgenerator (1) und den Speichermitteln (7) für Leeraufnahmen verbunden ist.

7. Röntgendiagnostikeinrichtung nach einem der Ansprüche 1 bis 6, **dadurch gekennzeichnet,** daß die Rechenmittel (9) eine zweite Recheneinheit (13) aufweisen, die mit dem Hochspannungsgenerator (1) und den Speichermitteln (8) für Nutzaufnahmen verbunden ist und aus den ihr zugeführten Schwächungswerten der Nutzaufnahmen zweite Schwächungskoeffizienten bildpunktweise ermittelt.

8. Röntgendiagnostikeinrichtung nach einem der Ansprüche 1 bis 7, **dadurch gekennzeichnet,** daß eine dritte Recheneinheit (15) vorgesehen ist, die aus den von den Recheneinheiten (12, 13) gelieferten Schwächungskoeffizienten ein Bild mit tatsächlichen Schwächungswerten ermittelt, das dem Objektbild ohne Filter entsprechen würde.

9. Röntgendiagnostikeinrichtung nach einem der Ansprüche 1 bis 8, **dadurch gekennzeichnet,** daß die Rechenmittel (9) einen Ortsfrequenz-Tiefpaß (14) aufweisen.

## Claims

1. X-ray diagnostic apparatus having an X-ray source (2) supplied by a high voltage generator (1), an X-ray image intensifier-video chain (4 to 8) for producing video signals, for storing the video signals of a dummy exposure, i.e. an exposure without the patient, and for reproduction of video signals and having calculating means (9) for calculating the stored video signals and the video signals of a subsequent exposure with the patient, characterised in that a filter means (11) is associated with the X-ray source (2) and in that the calculating means (9) is connected to and adapted to the video chain (6 to 8) and the high voltage generator (1) in such a way that it calculates the actual attenuation values of an X-ray exposure from the dummy exposure and the exposure with the patient with respectively inserted falter means (11).

2. X-ray diagnostic apparatus according to claim 1, characterised in that the filter means (11) has a prefiltering device.

3. X-ray diagnostic apparatus according to claim 1 or 2, characterised in that the filter means (11) has a graduated filter, i.e. a filter with varying attenuation.

4. X-ray diagnostic apparatus according to one of claims 1 to 3, characterised in that the calculating means (9) is constructed in such a way that, on the basis of the KV values supplied by the high voltage generator (1) and the material of the filter means (11), it determines the actual attenuation values pixel by pixel.

5. X-ray diagnostic apparatus according to one of claims 1 to 4, characterised in that the calculating means (9) is designed in such a way that, based on attenuation coefficients it determines the attenuation values pixel by pixel.

6. X-ray diagnostic apparatus according to one of claims 1 to 5, characterised in that the calculating means (9) has a first calculating unit (12) which determines first attenuation coefficients for dummy exposures and is connected to the high voltage generator (1) and the storage means (7).

7. X-ray diagnostic apparatus according to one of claims 1 to 6, characterised in that the calculating means (9) has a second calculating unit (13) which is connected to the high voltage generator (1) and the storage means (8) and determines second attenuation coefficients for working exposures pixel by pixel from the attenuation values of the working exposures supplied to it.

8. X-ray diagnostic apparatus according to one of claims 1 to 7, characterised in that a third calculating unit (15) is provided which, from the attenuation coefficients supplied from the calculating units (12, 13), determines an image with actual attenuation values which would correspond to the object image without a filter.

9. X-ray diagnostic apparatus according to one of claims 1 to 8, characterised in that the calculating means (9) has a spatial frequency low pass filter (14).

## Revendications

1. Appareil de radiodiagnostic comportant une source (2) de rayonnement X, alimentée par un générateur à haute tension (1), et comportant une chaîne de télévision à amplificateur radiologique de brillance (4 à 8, 10) pour la production de signaux vidéo, pour la mémorisation des signaux vidéo d'un enregistrement à vide, c'est-à-dire d'un enregistrement sans la présence d'un patient, et pour la représentation de signaux vidéo, et des moyens de calcul (9) pour traiter les signaux vidéo mémorisés et les signaux vidéo d'un enregistrement ultérieur effectué en présence d'un patient, caractérisé par le fait que des moyens de filtrage (11) sont associés à la source (2) de rayons X et que les moyens de calcul (9) sont raccordés à la chaîne de télévision (6 à 8) et au générateur à haute tension (1) et adaptés de manière à calculer les valeurs effectives d'affaiblissement d'une radiographie établie à partir de l'enregistrement à vide et de l'enregistrement en présence du patient, alors que les moyens de filtrage (11) sont respectivement insérés.

2. Appareil de radiodiagnostic suivant la revendication 1, caractérisé par le fait que les moyens de filtrage (11) comportent un dispositif de préfiltrage.

3. Appareil de radiodiagnostic suivant la revendication 1 ou 2, caractérisé par le fait que les moyens de filtrage (11) comportent un filtre à gradient, c'est-à-dire un filtre présentant un affaiblissement γ variable.

4. Appareil de radiodiagnostic suivant l'une des revendications 1 à 3, caractérisé par le fait que les moyens de calcul (9) sont agencés de telle sorte qu'ils déterminent pour chaque point d'image les valeurs effectives d'affaiblissement sur la base des valeurs kV délivrées par le générateur à haute tension (1) et du matériau des moyens de filtrage (11).

5. Appareil de radiodiagnostic suivant l'une des revendications 1 à 4, caractérisé par le fait que les moyens de calcul (9) sont agencés de telle sorte qu'ils déterminent pour chaque point d'image les valeurs d'affaiblissement sur la base de coefficients d'affaiblissement.

6. Appareil de radiodiagnostic suivant l'une des revendications 1 à 5, caractérisé par le fait que les moyens de calcul (9) possèdent une première unité de calcul (12), qui détermine des premiers coefficients d'affaiblissement et est raccordée au générateur à haute tension (1) et aux moyens de mémoire (7) pour les enregistrements à vide.

7. Appareil de radiodiagnostic suivant l'une des revendications 1 à 6, caractérisé par le fait que les moyens de calcul (9) possèdent une seconde unité de calcul (13), qui est raccordée au générateur à haute tension (1) et aux moyens de mémoire (8) pour des enregistrements utiles et détermine pour chaque point d'image des seconds coefficients d'affaiblissement à partir des valeurs d'affaiblissement des enregistrements utiles qui lui sont envoyés.

8. Appareil de radiodiagnostic suivant l'une des revendications 1 à 7, caractérisé par le fait qu'il est prévu une troisième unité de calcul (15), qui détermine, à partir des coefficients d'affaiblissement délivrés par les unités de calcul (12,13), une image possédant des valeurs d'affaiblissement effective et qui correspondrait à l'image objet sans filtre.

9. Appareil de radiodiagnostic suivant l'une des revendications 1 à 8, caractérisé par le fait que les moyens de calcul (9) possèdent un filtre passe-bas (14) pour la fréquence locale.
